(19) Europäisches Patentamt
European Patent Office
Office européen des brevets

(11) **EP 4 733 868 A1**

(12) **EUROPÄISCHE PATENTANMELDUNG**

(43) Veröffentlichungstag:
**29.04.2026  Patentblatt 2026/18**

(21) Anmeldenummer: **24207963.0**

(22) Anmeldetag: **22.10.2024**

(51) Internationale Patentklassifikation (IPC):
**G05B 19/05** (2006.01)

(52) Gemeinsame Patentklassifikation (CPC):
**G05B 19/058;** G05B 2219/14012;
G05B 2219/15049; G05B 2219/15101

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft
80333 München (DE)**

(72) Erfinder:
• **Schweiger, Julia
92242 Hirschau (DE)**
• **Schötz, Sebastian
92256 Hahnbach (DE)**
• **Walter, Markus
96050 Bamberg (DE)**

(74) Vertreter: **Siemens Patent Attorneys
Postfach 22 16 34
80506 München (DE)**

(54) **VERFAHREN ZUM BETREIBEN EINER ZYKLUSORIENTIERTEN STEUERUNGS-SOFTWARE**

(57) Die Erfindung betrifft ein Verfahren zum Betreiben einer zyklusorientierten Steuerungs-Software (Soft-PLC) zur Steuerung von Prozessen. Diese Software läuft innerhalb einer Laufzeit-Umgebung auf einem Rechnersystem (1) und nutzt zwei unabhängige Zeitbasen: eine erste Zeitbasis, abgeleitet von einem Hardware-Timer (CT), und eine zweite Zeitbasis, bereitgestellt durch einen vom Hardware-Timer unabhängigen Zeitgeber, der über eine Netzwerkkommunikation übermittelt wird (NT). Die zweite Zeitbasis wird durch Zeittelegramme mit Zeitstempeln bereitgestellt. Eine Empfangsroutine ordnet diese Zeitstempel einer Empfangszeit zu und speichert sie in einem Puffer. Eine Auswerteroutine (AR) erkennt und kompensiert Interrupts, die die Bereitstellung der sicheren Zeitbasis stören könnten. Die Vergangenheitswerte der ersten Zeitbasis werden in einem Umlaufpuffer gespeichert. Ein Interrupt-Handler aktualisiert periodisch diesen Puffer. Die Auswerteroutine (AR) prüft die Zeitdifferenzen zwischen den Telegrammen und korrigiert die zweite Zeitbasis bei Bedarf. Diese Methode gewährleistet eine zuverlässige und sichere Zeitmessung, selbst bei System-Management-Interrupts (SMI).

FIG 2

EP 4 733 868 A1

**Beschreibung**

Heute gängige Steuerungen basieren auf einer Hardwareplattform, einen speziellen elektronischen Unterbau, nämlich eine Speicherprogrammierbare Steuerung (SPS). Wenn neuerdings von virtuellen Steuerungen oder Softwaresteuerungen die Rede ist, so ist dafür ebenfalls eine Hardware zur Ausführung erforderlich, aber die Hardware kann jetzt komplett abstrahiert sein. Dies bedeutet, dass die ausgeführte Soft-SPS nicht mehr wissen muss, auf welchem Gerät sie läuft.

Diese Geräte können nach wie vor dedizierte Steuerungsgeräte sein, wie multifunktionale Steuerungsplattformen oder Industrie-PCs, oder aber Edge-Computing-Plattformen, diese sind immer häufiger in Steuerungsnetzwerken von Maschinen- und Anlagenbetreibern zu finden, oder es werden sogar Cloud-Computing-Plattformen genutzt. Entscheidend ist die Abstraktion der Hardware durch Container oder Hypervisor, auf diesen Containern wird die Soft-SPS mit Standardmitteln "deployed" also verteilt oder eingesetzt, beziehungsweise per Tool orchestriert, eine Installation wie bei der softwarebasierten Steuerung entfällt.

Die Erfindung liegt auf dem Fachgebiet von sicherheitsgerichteten Steuerungen, insbesondere als Software. Speicherprogrammierbare Steuerungen müssen gemäß den Anforderungen der Norm EN 61508 derart ausgestaltet sein, dass sie eine funktionale Sicherheit erfüllen. Bei sicherheitsbezogenen Systemen, wie speicherprogrammierbare Steuerungen für kritische Prozesse, die elektrische, elektronische oder programmierbare elektronische Komponenten enthalten und deren Ausfall ein maßgebliches Risiko für Mensch oder Umwelt bedeutet, müssen diese für eine besondere Gewährleistung der Sicherheit ausgestaltet sein. Als Beispiele für Anwendungen, welche eine erhöhte Sicherheit erfordern, sind folgende zu nennen: Kernkraftwerke, Leittechnik für Systeme mit sicherheitstechnischer Bedeutung, Bahnanwendungen, Telekommunikationstechnik, Signaltechnik und Datenverarbeitungssysteme, chemische Prozesse, aber auch beispielsweise kleine Anlagen wie eine Stanze zum Ausstanzen von Blechteilen.

Die Erfindung betriff ein Verfahren zum Betreiben einer zyklusorientierten Steuerungs-Software zur Steuerung eines Prozesses, wobei die Steuerungs-Software innerhalb einer Laufzeit-Umgebung auf einem Rechnersystem zum Ablauf gebracht wird, wobei zur Bereitstellung einer Sicheren-Zeitbasis eine erste Zeitbasis, welche von einem Hardware-Timer des Rechnersystems abgeleitet wird, und eine weitere zweite Zeitbasis, welche unabhängig von der ersten Zeitbasis ist, genutzt wird.

In der EP 2 284 771 B1 und in der EP 2 241 953 B1 wird beschrieben, dass in jedem Zyklus einer Sicherheitssteuerung eine sichere Zeit aus zwei Zeitgebern (Standard-Timer und Failsafe-Timer oder F-Timer) gebildet wird. Dies wird erreicht durch die Bildung der Zeitdifferenz zwischen zwei Zyklen (S-Diff und F-Diff) und anschließenden Vergleich der Zeitdifferenzen mit einer vorgegebenen Toleranz.

Bisher wurde die Ausführung der sicheren Zeit immer auf einer dem Anwender bekannten Hardwarebasis mit den entsprechenden Anforderungen an die diversitären Timer durchgeführt. Bei einer herkömmlichen Hardware-CPU sind auf der Platine zwei unabhängige Quarze vorhanden ein System-Quarz und extra Realtime RTC-Quarz. Bei einer Software-CPU bzw. einer hardwareunabhängigen Steuerungs-Software läuft die SPS auf einem unbekannten System ab.

Demnach muss sich das unbekannte System von einer anderen zuverlässigen Quelle eine zweite Zeitbasis holen. Dies erfolgt über eine Netzwerkkommunikation. Da auf dem unbekannten System interne System Management Interrupts oder andere höherpriore Interrupts auftreten können, kann der Ablauf auf dem System gestört und das Holen der zweiten Zeitbasis (Empfangsroutine), das Versenden des zweiten Taktes und der Zugriff auf die zweite Zeitquelle könnte beeinflusst werden und damit der verwendete Zeitstempel in der speicherprogrammierbaren Steuerung nicht aktuell ist.

Bei einem System Management Interrupt oder einem anderen Interrupt mit einer höheren Priorität als eine Empfangsroutine auf dem unbekannten System, werden die ankommenden Datenpakete mit der zweiten Zeit nicht empfangen.

Es ist demnach eine Aufgabe der Erfindung ein Verfahren bereitzustellen, bei welchen Interrupts kompensiert werden und somit keine Auswirkungen auf die Bereitstellung der Sicheren-Zeitbasis haben.

Die Aufgabe wird dadurch gelöst, dass bei dem eingangs genannten Verfahrens, die zweite Zeitbasis von einem Netzwerk-Timer einer Netzwerkkomponente abgeleitet wird. Die Netzwerkcomponente sendet in einem festgelegten Takt Zeittelegramme mit einem Zeitstempel aus.

Eine Empfangsroutine wird aufgerufen und dabei werden die empfangenen Zeittelegramme mit ihrem Zeitstempel einer Empfangszeit zugeordnet und in einen Zeit-Service-Puffer geschrieben.

Zusätzlich wird eine Auswerteroutine ausgeführt, mit welcher Interrupts des Rechnersystems, welche die Bereitstellung der Sicheren-Zeitbasis stören können, erkannt werden. Dabei sollen Interrupts mit einer Interrupt-Dauer größer als der Sendetakt erkannt werden, die innerhalb eines Zeitabschnitts vor Aufruf der Auswerteroutine auftreten, wobei Vergangenheitswerte der Zeitbasis in einem, Umlaufpuffer gehalten werden.

Ein Interrupt-Handler mit einer ersten Periodizität einen Index schrittweise ändert und die erste Zeitbasis in den Umlaufpuffer mit einer Anzahl an einer durch den Index bestimmten Position schreibt, wobei die erste Periodizität derart gewählt ist das zumindest die Vergangenheitswerte der Zeitbasis im Umlaufpuffer stehen, welche sich durch den Zeitabschnitt vor Aufruf der Auswerteroutine ergeben.

Die Auswerteroutine prüft, ob die Differenz zwischen der Empfangszeit des letzten Zeittelegramms und der Empfangszeit des vorletzten Zeittelegramms kleiner dem zweifachen Sendetakt ist, ist dies der Fall so werden in der Auswerteroutine Programmanweisungen durchlaufen, welcher der Korrektur der zweiten Zeitbasis dienen, da zumindest ein Zeittelegramm ausgefallen sein muss, demnach wird ein Zeitunterunterschied berechnet, welcher dann zur Korrektur auf den Zeitstempel des letzten erkannten Zeittelegramms aufaddiert wird.

Wenn ein System Management Interrupt (SMI) zwischen dem letzten und vorletzten empfangenen Datenpaket eines Zeittelegramms auftritt, kann die Bereitstellung der Sicheren-Zeitbasis gestört werden. Bei einem System Management Interrupt oder einem anderen Interrupt der eine höhere Priorität als die Empfangsroutine hat, werden die ankommenden Datenpakete mit der zweiten Zeitbasis nicht empfangen. Die Quarze bzw. die Zeitgeber nämlich der eigene Hardwarequarz und der Quarz der Netzwerkkomponente sind von den SMIs nicht betroffen, aber die Telegramme könnten verloren gehen. Beispielsweise hat ein Interrupt in folgenden Fällen Auswirkungen auf die Bereitstellung der sicheren Zeit.

Ein SMI tritt zwischen dem letzten und vorletzten empfangenen Datenpaket auf, welche ausgewertet werden.

Ein SMI tritt zwischen dem letzten empfangenen Datenpaket und der Auswerteroutine auf.

Damit wird die erste Periodizität = PZ1 vorzugsweise derart gewählt, dass ein Interrupt ab einer Interrupt-Dauer = TI des Sendetakt = ST bzw. des Sendeintervalls erkannt wird, um kleine Jitter der Auswerteroutine zu tolerieren wird vorzugsweise ein Wert für die Periodizität kleiner als der Sendetakt bzw. Sendeintervall gewählt. Ergänzend wird noch ein Sende-Toleranz-Fenster = STF eingeführt. Dann ergibt sich:

$$ZV = 2 * (ST + STF)$$

$$len = ZV/PZ1$$

Mit PZ1 = 0,8ms, ST = 1ms und STF = 1ms, ergibt sich ein Wert für len = 5, welcher auf len = 6 aufgerundet wird.

Mit der Annahme, dass die Zeittelegramme, welche die zweite Zeitbasis beinhalten alle 1ms versendet werden, muss die Auswerteroutine Interrupts mit einer Dauer von größer gleich 1ms die innerhalb von Zeitspanne von zwei Zeittelegramm zuzüglich eines Sende-Toleranzfenster erkennen. Das Erkennen bezieht sich auf Interrupts, welche vor dem Aufruf der Auswerteroutine aufgetreten sind, 4ms ergeben sich aus dem doppelten Sendetakt + Sende-Toleranzfenster multipliziert mit zwei, da die letzten beiden Zeittelegramme ausgewertet werden.

Dazu muss die erste Periodizität vorzugsweise kleiner als der Sendetakt sein, also zum Beispiel, bei einem Sendetakt von 1ms wird für die erste Periodizität 0,8 ms gewählt. Dann kann beispielsweise alle 0,8ms ein Hardwarequarz ausgelesen werden und in einen Umlaufpuffer können z.B. 64-Bit Werte in ns eingetragen werden.

Oder anders ausgedrückt, bei dem System Management Interrupts, die die sichere Zeitmessung stören können, besteht die Lösung in der Implementierung einer speziellen Routine. Diese Routine erkennt System Management Interrupts, die länger als 1ms dauern und innerhalb von 4ms vor dem Aufruf der Auswerteroutine auftreten. Dazu liest die Routine alle 0,8ms den Hardwarequarz aus und speichert die Werte in einen Umlaufpuffer von 64-Bit-Werten über 4 bis 4,8ms vor der Auswerteroutine. Ein Index bestimmt die Position des letzten Eintrags im Umlaufpuffer durch eine Modulo-Berechnung. Die Auswerteroutine führt dann Berechnungen der Toleranzen durch, um System Management Interrupts zu identifizieren und diese in die weitere Verarbeitung der Zeitsignale einzubeziehen. Diese Methode ermöglicht es, bei Bereitstellung der zweiten Zeit über eine Netzwerkkommunikation die Effekte von System Management Interrupts zu kompensieren, wodurch die Zuverlässigkeit der zweiten Zeit bzw. die Verfügbarkeit der speicherprogrammierbaren Steuerung erhöht wird. Diese Erfindung bringt den Vorteil, dass das virtualisierte System auf einer unbekannten Hardware, welches die zweite Zeit zur Bildung einer sicheren Zeitbasis über eine Netzwerkkommunikation empfängt, unempfindlich gegenüber unbeherrschbaren und nicht abstellbaren System Management Interrupts bzw. hochpriore Unterbrechungen macht. Die neue Lösung ermöglicht eine flexible und hardwareunabhängige Implementierung von sicheren Zeitfunktionen. In einer weiteren Ausgestaltung bestimmt die Auswerteroutine ein Ende und einen Anfang eines für den Interrupt relevanten Bereichs innerhalb des Umlaufpuffers, indem zunächst mit einer ersten Anweisung mögliche Interrupts gesperrt werden und während der Sperrzeit werden in einem zweiten Anweisungsblock folgende Schritte durchgeführt die erste Zeitbasis vom Hardware-Timer wird gelesen, der Index wird gelesen, die Werte aus dem Umlaufpuffer werden in einen Temporären-Umlaufpuffer kopiert, die gelesene erste Zeitbasis wird in den Temporären-Umlaufpuffer an die erste Position kopiert, dann werden mit einer dritten Anweisung mögliche Interrupts wieder freigegeben, in einer vierten Anweisung wird der zu berechnende Zeitunterunterschied zwischen dem Zeitstempel des letzten Zeittelegramms und dem Zeitstempel des vorletzten Zeittelegramms auf null gesetzt, wenn danach in einer ersten Verzweigung durch die Auswerteroutine erkannt wird das die Differenz zwischen der Empfangszeit des letzten Zeittelegramms und der Empfangszeit des vorletzten Zeittelegramms kleiner dem zweifachen Sendetakt und eine Differenz zwischen dem Zeitstempel des letzten Zeittelegramms und dem Zeitstempel des vorletzten Zeittelegramms kleiner dem zweifachen Sendetakt ist, wird der Zeitunterunterschied nicht neu berechnet, andererseits wird der Zeitunterunterschied in einer ersten

Fallbestimmung neu berechnet.

Der Zeitunterschied wird mit der ersten Fallbestimmung vorteilhafterweise wie folgt ermittelt in einem ersten Schritt wird ein erster Bereich für die Berechnung des Zeitunterschieds festgelegt dazu wird eine Obergrenze in dem Temporären-Umlaufpuffer gesucht, wobei beginnend mit der höchsten Position, der jeweilige Eintrag geprüft wird, ob er größer als der Wert der Empfangszeit des letzten erkannten Zeittelegramms ist, ist dies der Fall ist die Obergrenze festgelegt, weiterhin wird eine Untergrenze in dem Temporären-Umlaufpuffer gesucht, wobei beginnend mit der niedrigsten Position, der jeweilige Eintrag geprüft wird, ob er kleiner als der Wert der Empfangszeit des vorletzten erkannten Zeittelegramms ist, ist dies der Fall ist die Untergrenze festgelegt, in einem zweiten Schritt wird der Wert der Obergrenze und der Wert der Untergrenze voneinander abgezogen und wenn die Differenz größer als der Sendetakt ist wird die erste Periodizität von der Differenz abgezogen und der Rest auf den Zeitunterunterschied aufaddiert.

Die Obergrenze und die Untergrenze bilden ein Intervall, innerhalb des ermittelten Intervalls wird die Differenz zwischen benachbarten Zeitstempeln untersucht, wobei zum Beispiel eine Differenz von mehr als 1000 Mikrosekunden die Existenz von SMIs anzeigt.

Diese Methode ermöglicht eine präzise Bestimmung der Intervalle auch bei variierenden Datenraten. Mit Vorteil wird durch die flexible Handhabung der Zeitstempeldifferenzen eine zuverlässigere Erkennung von Anomalien gewährleistet, was zu einer erhöhten Genauigkeit und Zuverlässigkeit der Intervallbestimmung führt und die industrielle Anwendbarkeit des Verfahrens erheblich verbessert. Die Kombination dieser Merkmale führt zu einem verbesserten technischen Effekt, der über die bloße Addition bestehender Verbesserungen hinausgeht.

Weiterhin wird in einer zweiten Verzweigung geprüft, ob die Differenz aus der gelesenen ersten Zeitbasis, welche dann dem Aufrufzeit-Punkt der Auswerteroutine entspricht, und der Empfangszeit des letzten Zeittelegramms kleiner ist als dem zweifachen Sendetakt, ist dies der Fall wird ein Zeitabstand nicht neu berechnet, andererseits wird der Zeitabstand neu berechnet, wobei sich der Zeitabstand aus der Differenz der Empfangszeit des letzten Zeittelegramms und der Empfangszeit des vorletzten Zeittelegramms ergibt.

Der Zeitabstand wird mit einer zweiten Fallbestimmung berechnet, dabei wird von der Empfangszeit des letzten Zeittelegramms zu der Empfangszeit des vorletzten Zeittelegramms in der zweiten Fallbestimmung wie folgt vorgegangen,

in einem ersten Schritt wird ein zweiter Bereich für die Berechnung des Zeitabstand festlegt dazu wird eine Obergrenze in dem Temporären-Umlaufpuffer als die niedrigste Position festgelegt, eine Untergrenze in dem Temporären-Umlaufpuffer gesucht, wobei beginnend mit der niedrigsten Position, der jeweilige Eintrag geprüft wird, ob er kleiner als der Wert der Empfangszeit des letzten erkannten Zeittelegramms ist, ist dies der Fall ist die Untergrenze festgelegt, in einem zweiten Schritt wird der Wert der Obergrenze und der Wert der Untergrenze voneinander abgezogen und wenn die Differenz größer als der Sendetakt ist wird die erste Periodizität von der Differenz abgezogen und der Rest auf den Zeitabstand aufaddiert.

Vorteilhafterweise werden für die Bereichs-Festlegung und für die Berechnungen vier Kontrollen durchgeführt,

eine erste Kontrolle, bei welcher geprüft wird, ob die Differenz zwischen der Empfangszeit des letzten Zeittelegramms und der Empfangszeit des vorletzten Zeittelegramms kleiner dem zweifachen Sendetakt ist, eine zweite Kontrolle, bei welcher geprüft wird, ob die Differenz zwischen der Empfangszeit und der gelesenen erste Zeitbasis an der ersten Position in dem Temporären-Umlaufpuffer kleiner dem zweifachen Sendetakt ist, eine dritte Kontrolle, bei welcher geprüft wird, ob die Differenz zwischen dem Zeitstempel des letzten Zeittelegramms und dem Zeitstempel des vorletzten Zeittelegramms größer null ist, eine vierte Kontrolle, bei welcher geprüft wird, ob die Differenz zwischen dem Zeitstempel des letzten Zeittelegramms und dem Zeitstempel des vorletzten Zeittelegramms kleiner dem zweifachen Sendetakt ist, damit kann die Erkennung eines Interrupts in drei Fälle aufgeteilt werden, ein erster Fall, ein zweiter Fall und ein dritter Fall.

Als weitere Absicherung für die Bereitstellung der sichern Zeit wird eine erste Zeitdifferenz aus der ersten Zeitbasis des aktuellen Zyklus und der ersten Zeitbasis des Vorgänger Zyklus und eine zweite Zeitdifferenz aus der zweiten Zeitbasis des aktuellen Zyklus und der zweiten Zeitbasis des Vorgänger Zyklus gebildet und ein Vergleich der Zeitdifferenzen mit einer vorgegebenen Toleranz durchgeführt wird, und für den Fall dass die Abweichung der Zeitdifferenzen die Toleranz übersteigt wird ein Fehlersignal generiert.

Die Erfindung wird nachfolgend näher anhand eines Ausführungsbeispiels in der Zeichnung beschrieben.

Es zeigen:

FIG 1    ein Rechnersystem zum Betreiben einer zyklusorientierten Steuerungs-Software und

FIG 2    schematische Darstellung des Aufrufs einer Auswerteroutine,

FIG 3    Beispiel für den Aufruf einer Zeitfunktion, welche Auswerteroutine aufruft,

FIG 4      ein Programmablauf der Auswerteroutine,

FIG 5      eine Fallunterscheidung zur Erkennung eines Interrupts und die

FIG 6      ein zeitlicher Ablauf von Zeittelegrammen mit einem störenden Interrupt.

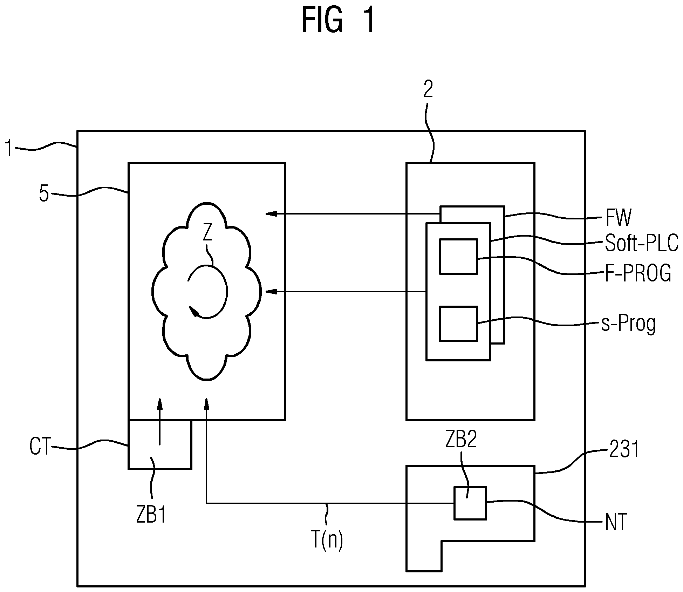

Gemäß FIG 1 ist ein Rechnersystem 1 umfassend einen Prozessor 5 mit einer Systemzeit, also einem Hardware-Timer, dargestellt. Das Rechnersystem 1 kann als eine beliebige IT-Infrastruktur, wie z.B. ein Industrie-PC, eine Edge-Computerplattform oder als eine Cloud Computing Plattform, ausgestaltet sein. Das Rechnersystem 1 weist einen Speicherbereich 2, in welchem eine Ablauf-Umgebung FW geladen ist, und eine Steuerungs-Software Soft-PLC auf, welche ein Sicherheitsprogramm F-Prog und ein Standardprogramm S-Prog aufweist. In dem Standardprogramm S-Prog kann der Anwender seine eigenen Anweisungen programmieren.

In dem Prozessor 5 wird die Systemzeit und eine Sicherheitszeit mit einem Zyklus Z zum Ablauf der Steuerungs-Software Soft-PLC mit dem Sicherheitsprogramm F-Prog genutzt und ausgewertet.

Demnach ist die Steuerungs-Software Soft-PLC in dem Speicherbereich 2 abgespeichert und wird zur fehlersicheren Steuerung von Automatisierungs-Abläufen eines Prozesses in dem Prozessor 5 zyklisch Z zum Ablauf gebracht.

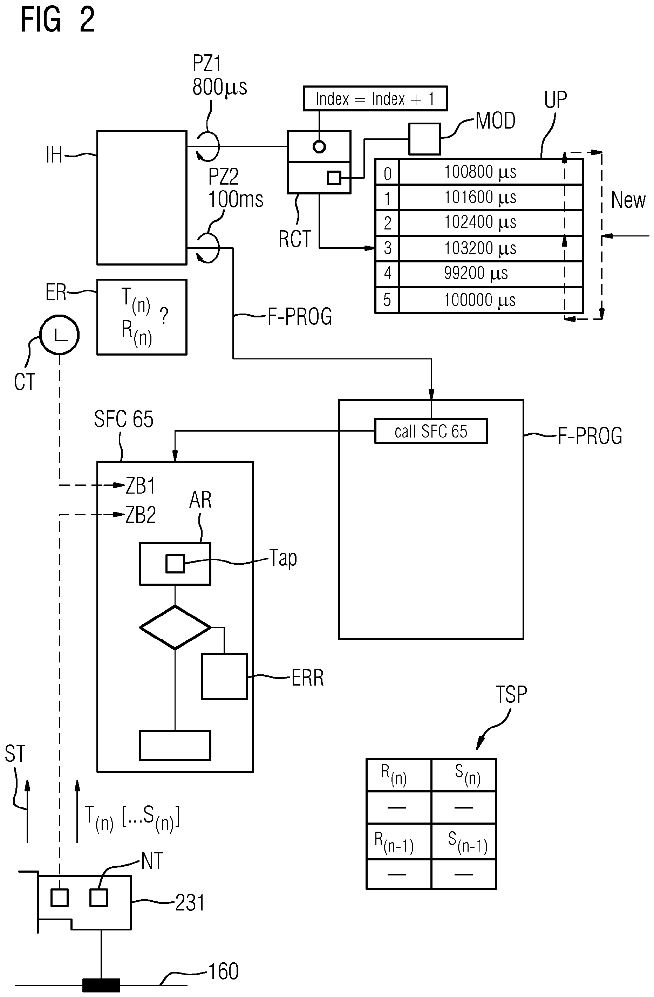

Gemäß FIG 2 ist eine schematische Darstellung des Aufrufs einer Auswerteroutine AR dargestellt. Das Verfahren zum Betreiben der zyklusorientierten Steuerungs-Software Soft-PLC, wobei die Steuerungs-Software Soft-PLC innerhalb der Laufzeit-Umgebung FW auf dem Rechnersystem 1 zum Ablauf gebracht wird, bezieht sich erfindungsgemäß auf die Bereitstellung einer Sicheren-Zeitbasis, wobei eine erste Zeitbasis ZB1, nämlich die Systemzeit aus FIG 1, welche von einem Hardware-Timer CT des Rechnersystems 1 abgeleitet wird, und eine weitere zweite Zeitbasis ZB2, nämlich die Sicherheitszeit, welche unabhängig von der ersten Zeitbasis ZB1 ist, genutzt wird.

Die zweite Zeitbasis ZB2 wird von einer Netzwerkkarte 231 in einem Sendetakt ST mit Zeittelegrammen T(n) mit einem Zeitstempel S(n) zu einem Zeitbaustein SFC65 geschickt, wobei der Zeitbaustein SFC65 auch die Auswerteroutine AR enthält. Der Hardware-Timer CT stellt dem Zeitbaustein SFC65 ebenfalls die erste Zeitbasis ZB1 zur Verfügung. Ein Interrupt-Händler IH ruft alle 800 ms, also mit einer ersten Periodizität PZ1, eine Abspeicherroutine auf, um Vergangenheitswerte der Zeitbasis ZB1 in einem Umlaufpuffer UP zu speichern.

Erfindungsgemäß werden die Vergangenheitswerte der Zeitbasis ZB1 in dem Umlaufpuffer UP gehalten. Der Interrupt-Händler IH erhöht schrittweise mit der ersten Periodizität PZ1 einen Index Index und die erste Zeitbasis ZB1 wird in den Umlaufpuffer UP mit einer Anzahl len an einer durch den Index Index bestimmten Position i geschrieben. Die erste Periodizität PZ1 ist derart gewählt, dass zumindest die Vergangenheitswerte der Zeitbasis ZB1 im Umlaufpuffer UP stehen, welche sich durch den Zeitabschnitt vor Aufruf der Auswerteroutine AR ergeben.

Es ist Aufgabe der Auswerteroutine AR Interrupts mit hoher Priorität oder SMIs des Rechnersystems 1 zu erkennen, welche die Bereitstellung der Sicheren-Zeitbasis stören könnten, zu erkennen. Es sollen Interrupts mit einer Interrupt-Dauer TI größer als der Sendetakt ST erkannt werden, die innerhalb des Zeitabschnitts vor Aufruf der Auswerteroutine AR auftreten.

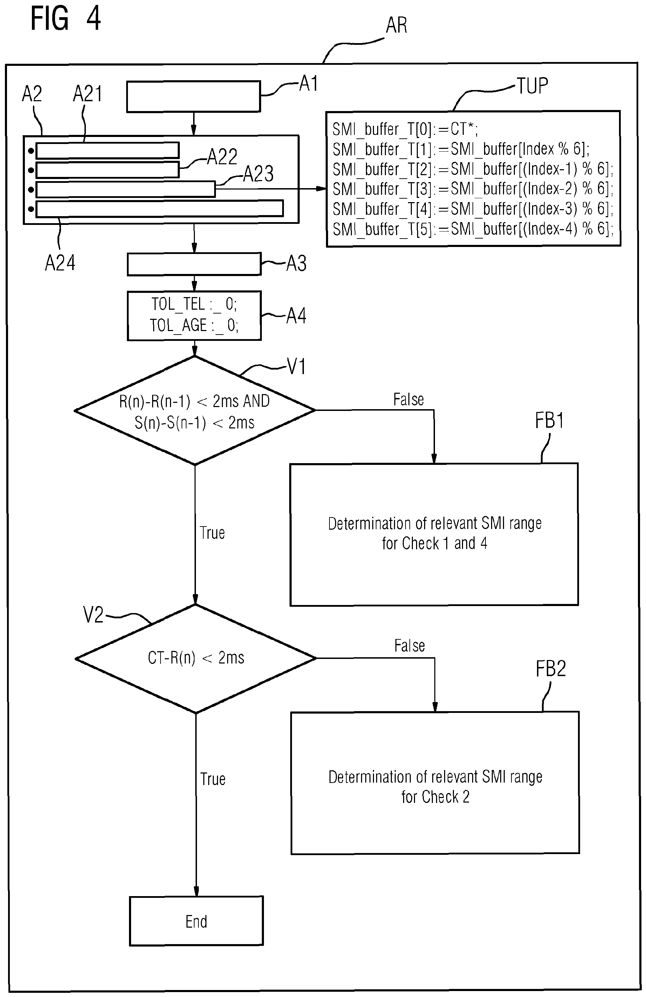

Der Interrupt-Händler IH ruft mit einer zweiten Periodizität PZ2 von 100 ms jeweils das Sicherheitsprogramm F-Prog auf. Zu Beginn des Sicherheitsprogrammes F-Prog wird der Zeitbaustein SFC65 zur Bereitstellung der sicheren Zeitbasis SB aufgerufen. In dem Zeitbaustein SFC65 stehen die erste Zeitbasis ZB1 und die zweite Zeitbasis ZB2 bereit. Dann wird die Auswerteroutine AR aufgerufen. Der genaue Ablauf der Auswerteroutine AR ist in FIG 4 dargestellt. Eine Empfangsroutine ER ist beispielsweise als ein Linux-Thread ausgestaltet und wird aufgerufen, sobald ein Zeittelegramm T(n) angekommen ist. Wird von der Empfangsroutine ER ein Zeittelegramm T(n) empfangen, so legt sie die entsprechenden Zeitstempel S(n) in einen Zeit-Service-Puffer TSP ab. Entsprechend wird eine Empfangszeit R(n) des letzten Zeittelegramms T(n) und eine Empfangszeit R(n-1) des vorletzten Zeittelegramms T(n-1) abgelegt. Auch wird ein Zeitstempel S(n) des letzten Zeittelegramms T(n) und ein Zeitstempel S(n-1) des vorletzten Zeittelegramms T(n-1) abgelegt. In dem Sicherheitsprogramm F-Prog wird zu Beginn immer der Zeitbaustein SFC65 aufgerufen und anschließend wird nach dem Aufruf des Zeitbausteins SFC65 das Sicherheitsprogramm F-Prog und ein Anwenderprogramm S-Prog abgearbeitet.

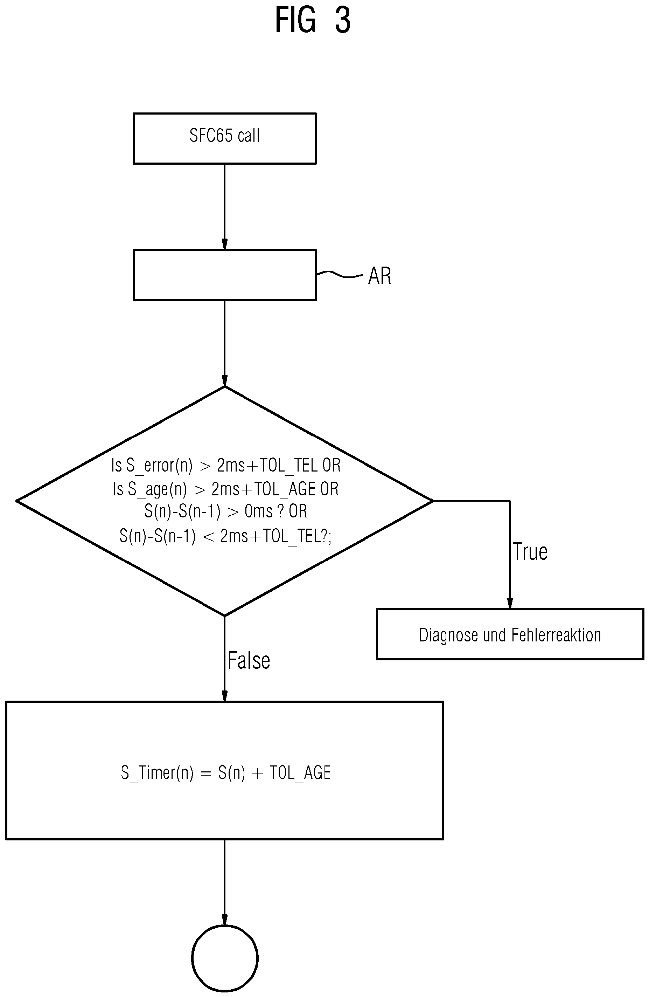

Gemäß FIG 3 ist ein Programmablauf innerhalb des Zeitbausteins SFC65 dargestellt. Nach dem der Zeitbaustein SFC65 aufgerufen wurde, wird die Auswerteroutine AR aufgerufen, bei welcher geprüft wird, ob die ermittelte zweite Zeitbasis ZB2 eventuell durch Interrupts gestört wurde und in der Auswerteroutine AR wird dann dementsprechend ein Korrekturwert berechnet. Ein Korrekturwert stellt sich als Zeitunterschied TOL_TEL bereit. Die Auswerteroutine AR liefert demnach den Zeitunterschied TOL_TEL und einen Zeitabstand TOL_AGE zurück. Mit diesem zurückgelieferten Werten kann der Zeitbaustein SFC65 weiterhin prüfen, ob die sichere Zeitbasis noch bereitgestellt werden kann.

Die FIG 4 zeigt einen Programmablaufplan der Auswerteroutine AR. Die Auswerteroutine AR wird ausgeführt, um festzustellen, ob Interrupts SMI des Rechnersystems 1 die Bereitstellung der Sicheren-Zeitbasis eventuell stören können. Diese eventuellen Störungen können mit der Auswerteroutine AR erkannt werden. Die Auswerteroutine AR bestimmt ein Ende und einen Anfang eines für den Interrupt SMI relevanten Bereichs B1,B2 innerhalb des Umlaufpuffers UP. Mit einer ersten Anweisung A1 sperrt die Auswerteroutine AR mögliche Interrupts SMI. Und während der Sperrzeit werden in einem zweiten Anweisungsblock A2 folgende Schritte durchgeführt.

Erster Schritt A21, die erste Zeitbasis ZB1 wird vom Hardware-Timer CT gelesen, nächster Schritt A22 der Index Index wird gelesen, dritter Schritt A23 die Werte aus dem Umlaufpuffer UP werden in einem temporären Umlaufpuffer TUP kopiert, vierter Schritt A24 die gelesene erste Zeitbasis ZB1 wird in den temporären Umlaufpuffer TUP an die erste Position i= 0 kopiert. Mit einer dritten Anweisung A3 werden mögliche Interrupts SMI wieder freigegeben. In einer vierten Anweisung A4 wird der zu berechnende Zeitunterschied TOL_TEL und der Zeitabstand TOL_AGE auf null gesetzt.

In einer ersten Verzweigung V1 wird nun geprüft, ob die Differenz zwischen der Empfangszeit R(n) des letzten Zeittelegramms T(n) und der Empfangszeit R(n-1) des vorletzten Zeittelegramms T(n-1) kleiner dem zweifachen Sendetakt ST ist und es wird zusätzlich geprüft ob eine Differenz zwischen dem Zeitstempel S(n) des letzten Zeittelegramms T(n) und dem Zeitstempel S(n-1) des vorletzten Zeittelegramms T(n-1) kleiner dem zweifachen Sendetakt ST ist. Ist dies der Fall, wird der Zeitunterschied TOL_TEL nicht neu berechnet. Ist dies nicht der Fall, wird der Zeitunterschied TOL_TEL in einer ersten Fallbestimmung FB1 neu berechnet.

In der ersten Fallbestimmung FB1 wird der Zeitunterschied TOL_TEL wie folgt berechnet. In einem ersten Schritt wird ein erster Bereich B1 für die Berechnung des Zeitunterschieds TOL_TEL festgelegt, dazu wird eine Obergrenze in den temporären Umlaufpuffer TUP gesucht, wobei beginnend mit der höchsten Position, der jeweilige Eintrag geprüft wird, ob er größer als der Wert der Empfangszeit R(n) des letzten erkannten Zeittelegramms T(n) ist. Ist dies der Fall, ist die Obergrenze festgelegt.

Eine Untergrenze in den temporären Umlaufpuffer TUP wird folgendermaßen gesucht, beginnend mit der niedrigsten Position, wird der jeweilige Eintrag geprüft, ob er kleiner als der Wert der Empfangszeit R(n-1) des vorletzten erkannten Zeittelegramms T(n-1) ist. Ist dies der Fall, ist die Untergrenze festgelegt.

In einem zweiten Schritt wird der Wert der Obergrenze und der Wert der Untergrenze voneinander abgezogen und wenn die Differenz größer als der Sendetakt ST = 1ms ist, wird die erste Periodizität PZ1 = 800µs von der Differenz abgezogen und der Rest wird auf den Zeitunterschied TOL_TEL als Korrektur aufaddiert.

In einer zweiten Verzweigung V2 wird dann geprüft, ob die Differenz aus der gelesenen ersten Zeitbasis ZB1, welche dann dem Aufrufzeitpunkt der Auswerteroutine AR entspricht, und der Empfangszeit R(n) des letzten Zeittelegramms T(n) kleiner ist als dem zweifachen Sendetakt ST = 2ms. Ist dies der Fall, wird der erste Zeitabstand TOL_AGE nicht neu berechnet. Für eine Neuberechnung des Zeitabstandes TOL_AGE wird die Differenz der Empfangszeit R(n) des letzten Zeittelegramms T(n) und der Empfangszeit R(n-1) des vorletzten Zeittelegramms T(n-1) genutzt.

In einer zweiten Fallbestimmung FB2 werden auch eine Ober- und eine Untergrenze ermittelt. In einem ersten Schritt wird ein zweiter Bereich für die Berechnung des Zeitabstandes TOL_AGE festgelegt, dazu wird eine Obergrenze in dem temporären Umlaufpuffer TUP als die niedrigste Position festgelegt. Eine Untergrenze in dem temporären Umlaufpuffer TUP wird gesucht, in dem beginnend von der niedrigsten Position der jeweilige Eintrag geprüft wird, ob er kleiner als der Wert der Empfangszeit R(n) des letzten erkannten Zeittelegramms T(n) ist. Ist dies der Fall, ist die Untergrenze festgelegt.

In einem zweiten Schritt wird der Wert der Obergrenze und der Wert der Untergrenze voneinander abgezogen und wenn die Differenz größer als der Sendetakt ST ist, wird die erste Periodizität PZ1 von der Differenz abgezogen und der Rest auf den Zeitabstand TOL_AGE aufaddiert.

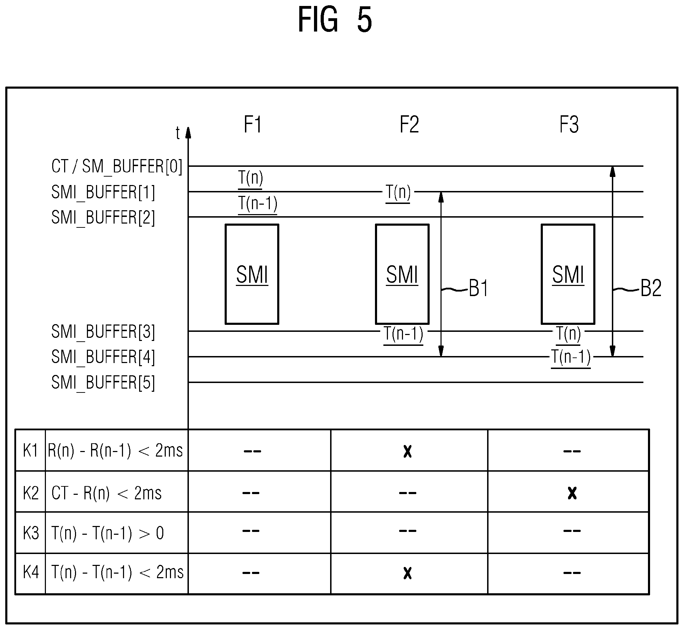

Gemäß der FIG 5 sind für die Erkennung eines Interrupts SMI drei Fälle aufgezeigt, ein erster Fall F1, ein zweiter Fall F2 und ein dritter Fall F3. Für die Berechnung der Bereichs-Festlegung B1,B2 und für die Berechnungen der Zeitunterschiede TOL_TEL bzw. der Zeitabstände TOL_AGE werden vier Kontrollen K1,... K4 durchgeführt. In einer ersten Kontrolle K1 wird geprüft, ob die Differenz zwischen der Empfangszeit R(n) des letzten Zeittelegramms T(n) und der Empfangszeit R(n-1) des vorletzten Zeittelegramms T(n-1) kleiner dem zweifachen Sendetakt ST ist. In einer zweiten Kontrolle K2 wird geprüft, ob die Differenz zwischen der Empfangszeit R(n) und der gelesenen ersten Zeitbasis ZB1 an der ersten Position in dem temporären Umlaufpuffer TUP kleiner dem zweifachen Sendetakt ST ist. In einer dritten Kontrolle K3 wird geprüft, ob die Differenz zwischen dem Zeitstempel S(n) des letzten Zeittelegramms T(n) und dem Zeitstempel S(n-1) des vorletzten Zeittelegramms T(n-1) größer Null ist. In einer vierten Kontrolle K4 wird geprüft, ob die Differenz zwischen dem Zeitstempel S(n) des letzten Zeittelegramms T(n) und dem Zeitstempel S(n-1) des vorletzten Zeittelegramms T(n-1) kleiner dem zweifachen Sendetakt ST ist. Damit kann die Erkennung eines Interrupts SMI in drei Fälle, den ersten Fall F1, den zweiten Fall F2 und den dritten Fall F3 aufgeteilt werden. Gemäß dem ersten Fall F1 ist alles glatt gelaufen und ein Zeittelegramm T(n) ist nicht gestört worden. Bei dem zweiten Fall F2 ist die erste Kontrolle K1 und die zweite Kontrolle K4 positiv, also muss eine Ersatzzeit bestimmt werden. Bei dem dritten Fall F3 ist die zweite Kontrolle K2 positiv aufgefallen und eine Ersatzzeit muss berechnet werden.

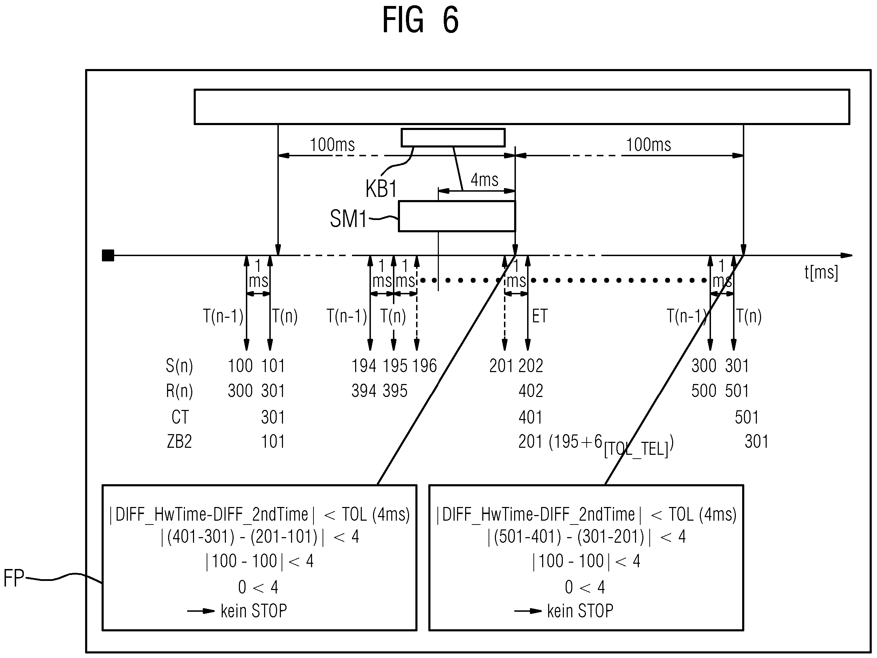

Mit der FIG 6 ist der zeitliche Empfang von Zeittelegrammen T(n) bzw. T(n-1) über einen Zeitstrahl dargestellt. Es ist ein kritischer Bereich KPI für Interrupts dargestellt, bei welchen es möglich ist, dass ein Zeittelegramm T(n) verschluckt wird. Ein möglicher System-Management-Interrupt SMI ist eingezeichnet, dieser würde den Empfang von Telegrammen der Empfangsroutine ER stören. Eine Zeile zeigt die Zahlwerte für den Zeitstempel S(n) aus der Netzwerkkommunikation, eine Zeile zeigt die Empfangszeit R(n), eine Zeile zeigt die erste Zeitbasis ZB1 vom Hardware-Timer CT und die letzte Zeile zeigt die zweite Zeitbasis ZB1. An der Stelle, wo der System-Management-Interrupt SMI eingezeichnet ist, würde er das Zeittelegramm T(n) mit der Zeitzahl 196 verschlucken. Auch die anderen darauffolgenden fünf Zeittelegramme bis zur Zeitzahl 201 würden verschluckt werden. Dann ist der System-Management-Interrupt SMI zu Ende und das nächste Zeittelegramm T(n) mit der Zeitzahl 201 wird wieder sichtbar. Im Speicher steht aber noch die letzte Zeitzahl 195 vor der Erscheinung des System-Management-Interrupts SMI. Die Auswerteroutine AR sorgt nun dafür, dass auf dem letzten Zeitwert 195 sechs Zeitwerte aufaddiert werden, so dass man wieder auf einen Zeitwert von 201 kommt.

Zusammenfassend betrifft die Erfindung ein Verfahren zum Betreiben einer zyklusorientierten Steuerungs-Software (Soft-PLC) zur Steuerung von Prozessen. Diese Software läuft innerhalb einer Laufzeit-Umgebung auf einem Rechnersystem und nutzt zwei unabhängige Zeitbasen: eine erste Zeitbasis, abgeleitet von einem Hardware-Timer, und eine zweite Zeitbasis, bereitgestellt durch einen vom Hardware-Timer unabhängigen Zeitgeber, der über eine Netzwerkkommunikation übermittelt wird. Die zweite Zeitbasis wird durch Zeittelegramme mit Zeitstempeln bereitgestellt. Eine Empfangsroutine ordnet diese Zeitstempel einer Empfangszeit zu und speichert sie in einem Puffer. Eine Auswerteroutine erkennt und kompensiert Interrupts, die die Bereitstellung der sicheren Zeitbasis stören könnten. Die Vergangenheitswerte der ersten Zeitbasis werden in einem Umlaufpuffer gespeichert. Ein Interrupt-Handler aktualisiert periodisch diesen Puffer. Die Auswerteroutine prüft die Zeitdifferenzen zwischen den Telegrammen und korrigiert die zweite Zeitbasis bei Bedarf. Diese Methode gewährleistet eine zuverlässige und sichere Zeitmessung, selbst bei System-Management-Interrupts.

## Patentansprüche

1. Verfahren zum Betreiben einer zyklusorientierten Steuerungs-Software (Soft-PLC) zur Steuerung eines Prozesses, wobei die Steuerungs-Software (Soft-PLC) innerhalb einer Laufzeit-Umgebung (FW) auf einem Rechnersystem (1) zum Ablauf gebracht wird, wobei zur Bereitstellung einer Sicheren-Zeitbasis (SB)

- eine erste Zeitbasis (ZB1), welche von einem Hardware-Timer (CT) des Rechnersystems (1) abgeleitet wird, und

- eine weitere zweite Zeitbasis (ZB2), welche unabhängig von der ersten Zeitbasis (ZB1) ist, genutzt wird

dadurchgekennzeichnet, dass

die zweite Zeitbasis (ZB2) von einem Netzwerk-Timer (NT) einer Netzwerkkomponente abgeleitet wird, wobei

- die Netzwerkkomponente in einem Sendetakt (ST) Zeittelegramme (T(n)) mit einem Zeitstempel (S(n)) sendet,

- eine Empfangsroutine (ER) bei einem eingehenden Zeittelegramm (T(n)) aufgerufen wird, dabei werden die Zeittelegramme (T(n)) mit ihrem Zeitstempel (S(n)) einer Empfangszeit R(n) zugeordnet und in einen Zeit-Service-Puffer (TSP) geschrieben,

- eine Auswerteroutine (AR) ausgeführt wird, mit welcher

Interrupts (SMI) des Rechnersystems (1), welche die Bereitstellung der Sicheren-Zeitbasis (SB) stören können, erkannt werden, dabei sollen Interrupts (SMI) mit einer Interrupt-Dauer (TI) größer als der Sendetakt (ST) erkannt werden, die innerhalb eines Zeitabschnitts (ZV) vor Aufruf der Auswerteroutine (AR) auftreten,

- Vergangenheitswerte der Zeitbasis (ZB1) in einem,

Umlaufpuffer (UP) gehalten werden,

- ein Interrupt-Handler (IH) mit einer ersten Periodizität (PZ1) einen Index (Index) schrittweise ändert und die erste Zeitbasis (ZB1) in den Umlaufpuffer (UP) mit einer Anzahl (len) an einer durch den Index (Index) bestimmten Position (i) schreibt, wobei die erste Periodizität (PZ1) derart gewählt ist das zumindest die Vergangenheitswerte der Zeitbasis (ZB1) im Umlaufpuffer (UP) stehen, welche sich durch den Zeitabschnitt (ZV) vor Aufruf der Auswerteroutine (AR) ergeben,

- die Auswerteroutine (AR) prüft, ob die Differenz zwischen der Empfangszeit R(n) des letzten Zeittelegramms (T(n)) und der Empfangszeit R(n-1) des vorletzten Zeittelegramms (T(n-1)) kleiner dem zweifachen Sendetakt (ST) ist, ist dies der Fall so werden in der Auswerteroutine (AR) Programmanweisungen durchlaufen, welcher der Korrektur der zweiten Zeitbasis (ZB2) dienen, da zumindest ein Zeittelegramm (T(n)) ausgefallen sein muss, demnach wird ein Zeitunterunterschied (TOL_TEL) berechnet, welcher dann zur Korrektur auf den Zeitstempel (S(n)) des letzten erkannten Zeittelegramms (T(n)) aufaddiert wird.

2. Verfahren nach Anspruch 1, wobei

die Auswerteroutine (AR) ein Ende und einen Anfang eines für den Interrupt (SMI) relevanten Bereich (B1,B2) innerhalb des Umlaufpuffer (UP) bestimmt, indem zunächst mit einer ersten Anweisung (A1) mögliche Interrupts (SMI) gesperrt werden und während der Sperrzeit werden in einem zweiten Anweisungsblock (A2) folgende Schritte durchgeführt

- die erste Zeitbasis (ZB1) vom Hardware-Timer (CT) wird gelesen,
- der Index (Index) wird gelesen,
- die Werte aus dem Umlaufpuffer (UP) werden in einen Temporären-Umlaufpuffer (TUP) kopiert,
- die gelesene erste Zeitbasis (ZB1) wird in den Temporären-Umlaufpuffer (TUP) an die erste Position kopiert,

dann werden mit einer dritten Anweisung (A3) mögliche Interrupts (SMI) wieder freigegeben, in einer vierten Anweisung (A4) wird der zu berechnende Zeitunterunterschied (TOL_TEL) zwischen dem Zeitstempel (S(n)) des letzten Zeittelegramms (T(n)) und dem Zeitstempel (S(n-1)) des vorletzten Zeittelegramms (T(n-1)) auf null gesetzt, wenn danach in einer ersten Verzweigung (V1) durch die Auswerteroutine (AR) erkannt wird das

- die Differenz zwischen der Empfangszeit R(n) des letzten Zeittelegramms (T(n)) und der Empfangszeit R(n-1) des vorletzten Zeittelegramms (T(n-1)) kleiner dem zweifachen Sendetakt (ST) und eine
- Differenz zwischen dem Zeitstempel (S(n)) des letzten Zeittelegramms (T(n)) und dem Zeitstempel (S(n-1)) des vorletzten Zeittelegramms (T(n-1)) kleiner dem zweifachen Sendetakt (ST) ist, wird der Zeitunterunterschied (TOL_TEL) nicht neu berechnet, andererseits wird der
- Zeitunterunterschied (TOL_TEL) in einer ersten Fallbestimmung (FB1) neu berechnet.

3. Verfahren nach Anspruch 2, wobei der Zeitunterunterschied (TOL_TEL) in der ersten Fallbestimmung (FB1) wie folgt ermittelt wird:

- in einem ersten Schritt wird ein erster Bereich (B1) für die Berechnung des Zeitunterunterschieds (TOL_TEL) festgelegt dazu wird

- eine Obergrenze in dem Temporären-Umlaufpuffer (TUP) gesucht, wobei beginnend mit der höchsten Position, der jeweilige Eintrag geprüft wird, ob er größer als der Wert der Empfangszeit R(n) des letzten erkannten Zeittelegramms (T(n)) ist, ist dies der Fall ist die Obergrenze festgelegt, weiterhin wird
- eine Untergrenze in dem Temporären-Umlaufpuffer (TUP) gesucht, wobei beginnend mit der niedrigsten Position, der jeweilige Eintrag geprüft wird, ob er kleiner als der Wert der Empfangszeit R(n-1) des vorletzten erkannten Zeittelegramms (T(n-1)) ist, ist dies der Fall ist die Untergrenze festgelegt,

in einem zweiten Schritt wird der Wert der Obergrenze und der Wert der Untergrenze voneinander abgezogen und wenn die Differenz größer als der Sendetakt (ST) ist wird die erste Periodizität (PZ1) von der Differenz abgezogen und der Rest auf den Zeitunterunterschied (TOL_TEL) aufaddiert.

4. Verfahren nach einem der Ansprüche 2 bis 3, wobei in einer zweiten Verzweigung (V2) geprüft wird, ob die Differenz aus der gelesenen ersten Zeitbasis (ZB1), welche dann dem Aufrufzeit-Punkt der Auswerteroutine (AR) entspricht, und der Empfangszeit R(n) des letzten Zeittelegramms (T(n)) kleiner ist als dem zweifachen Sendetakt (ST), ist dies der Fall wird ein Zeitabstand (TOL_AGE) nicht neu berechnet, andererseits wird der Zeitabstand (TOL_AGE) neu berechnet, wobei sich der Zeitabstand (TOL_AGE) aus der Differenz der Empfangszeit R(n) des letzten Zeittelegramms (T(n)) und der Empfangszeit R(n-1) des vorletzten Zeittelegramms (T(n-1)) ergibt.

5. Verfahren nach Anspruch 4, wobei der Zeitabstand (TOL_AGE) von der Empfangszeit R(n) des letzten Zeittelegramms (T(n)) zu der Empfangszeit R(n-1) des vorletzten Zeittelegramms (T(n-1)) in einer zweiten Fallbestimmung (FB2) wie folgt ermittelt wird:

- in einem ersten Schritt wird ein zweiter Bereich (B2) für die Berechnung des Zeitabstand (TOL_AGE) festlegt dazu wird

- eine Obergrenze in dem Temporären-Umlaufpuffer (TUP) als die niedrigste Position festgelegt,
- eine Untergrenze in dem Temporären-Umlaufpuffer (TUP) gesucht, wobei beginnend mit der niedrigsten Position, der jeweilige Eintrag geprüft wird, ob er kleiner als der Wert der Empfangszeit R(n) des letzten erkannten Zeittelegramms (T(n)) ist, ist dies der Fall ist die Untergrenze festgelegt,

- in einem zweiten Schritt wird der Wert der Obergrenze und der Wert der Untergrenze voneinander abgezogen und wenn die Differenz größer als der Sendetakt (ST) ist wird die erste Periodizität (PZ1) von der Differenz abgezogen und der Rest auf den Zeitabstand (TOL_AGE) aufaddiert.

6. Verfahren nach einem der Ansprüche 3 bis 5, wobei für die Bereichs-Festlegung (B1;B2) und für die Berechnungen vier Kontrollen (K1,..,K4) durchgeführt werden,

- eine erste Kontrolle (K1), bei welcher geprüft wird, ob die Differenz zwischen der Empfangszeit R(n) des letzten Zeittelegramms (T(n)) und der Empfangszeit R(n-1) des vorletzten Zeittelegramms (T(n-1)) kleiner dem zweifachen Sendetakt (ST) ist,
- eine zweite Kontrolle (K2), bei welcher geprüft wird, ob die Differenz zwischen der Empfangszeit R(n) und der gelesenen erste Zeitbasis (ZB1) an der ersten Position in dem Temporären-Umlaufpuffer (TUP) kleiner dem zweifachen Sendetakt (ST) ist,
- eine dritte Kontrolle (K3), bei welcher geprüft wird, ob die Differenz zwischen dem Zeitstempel (S(n)) des letzten Zeittelegramms (T(n)) und dem Zeitstempel (S(n-1)) des vorletzten Zeittelegramms (T(n-1)) größer null ist,
- eine vierte Kontrolle (K4), bei welcher geprüft wird, ob die Differenz zwischen dem Zeitstempel (S(n)) des letzten Zeittelegramms (T(n)) und dem Zeitstempel (S(n-1)) des vorletzten Zeittelegramms (T(n-1)) kleiner dem zweifachen Sendetakt (ST) ist,

damit kann die Erkennung eines Interrupts (SMI) in drei Fälle aufgeteilt werden, ein erster Fall (F1), ein zweiter Fall (F2) und ein dritter Fall (F3).

7. Verfahren nach einem der Ansprüche 1 bis 6, wobei eine erste Zeitdifferenz (S-Diff) aus der ersten Zeitbasis (ZB1) des aktuellen Zyklus (Zn) und der ersten Zeitbasis (ZB1) des Vorgänger Zyklus (Zn-1) und eine zweite Zeitdifferenz (F-Diff) aus der zweiten Zeitbasis (ZB2) des aktuellen Zyklus (Zn) und der zweiten Zeitbasis (ZB2) des Vorgänger Zyklus (Zn-1) gebildet wird und ein Vergleich der Zeitdifferenzen (S-Diff,F-Diff) mit einer vorgegebenen Toleranz (TOL) durchgeführt wird, und für den Fall dass die Abweichung der Zeitdifferenzen (S-Diff,F-Diff) die Toleranz (TOL) übersteigt wird ein Fehlersignal generiert.

# FIG 1

# FIG 2

PZ1
800μs

Index = Index + 1

MOD

UP

IH

PZ2
100ms

RCT

| 0 | 100800 μs |
| 1 | 101600 μs |
| 2 | 102400 μs |
| 3 | 103200 μs |
| 4 | 99200 μs |
| 5 | 100000 μs |

New

ER

$T_{(n)}$ ?
$R_{(n)}$

F-PROG

CT

L

SFC 65

call SFC 65

F-PROG

ZB1

ZB2

AR

Tap

ERR

TSP

ST

$T_{(n)}$ [...$S_{(n)}$]

NT

231

| $R_{(n)}$ | $S_{(n)}$ |
|---|---|
| — | — |
| $R_{(n-1)}$ | $S_{(n-1)}$ |
| — | — |

160

# FIG 3

SFC65 call

AR

Is S_error(n) > 2ms+TOL_TEL OR
Is S_age(n) > 2ms+TOL_AGE OR
S(n)-S(n-1) > 0ms ? OR
S(n)-S(n-1) < 2ms+TOL_TEL?;

True

Diagnose und Fehlerreaktion

False

S_Timer(n) = S(n) + TOL_AGE

# FIG 4

AR

A2  A21  A1  TUP

TUP:
```
SMI_buffer_T[0]:=CT*;
SMI_buffer_T[1]:=SMI_buffer[Index % 6];
SMI_buffer_T[2]:=SMI_buffer[(Index-1) % 6];
SMI_buffer_T[3]:=SMI_buffer[(Index-2) % 6];
SMI_buffer_T[4]:=SMI_buffer[(Index-3) % 6];
SMI_buffer_T[5]:=SMI_buffer[(Index-4) % 6];
```

A22
A23
A24

A3

A4:
TOL_TEL :_ 0;
TOL_AGE :_ 0;

V1: $R(n)-R(n-1) < 2ms$ AND $S(n)-S(n-1) < 2ms$

False

FB1: Determination of relevant SMI range for Check 1 and 4

True

V2: $CT-R(n) < 2ms$

False

FB2: Determination of relevant SMI range for Check 2

True

End

# FIG 5

| | | F1 | F2 | F3 |
|---|---|---|---|---|

CT / SM_BUFFER[0]

SMI_BUFFER[1]

SMI_BUFFER[2]

$T(n)$

$T(n-1)$

$T(n)$

SMI | SMI | SMI — B1 | — B2

SMI_BUFFER[3]

SMI_BUFFER[4]

SMI_BUFFER[5]

$T(n-1)$

$T(n)$

$T(n-1)$

| | | F1 | F2 | F3 |
|---|---|---|---|---|
| K1 | $R(n) - R(n-1) < 2ms$ | -- | X | -- |
| K2 | $CT - R(n) < 2ms$ | -- | -- | X |
| K3 | $T(n) - T(n-1) > 0$ | -- | -- | -- |
| K4 | $T(n) - T(n-1) < 2ms$ | -- | X | -- |

# FIG 6

EP 4 733 868 A1

EP 4 733 868 A1

Europäisches Patentamt
European Patent Office
Office européen des brevets

# EUROPÄISCHER RECHERCHENBERICHT

Nummer der Anmeldung

EP 24 20 7963

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 2 284 771 B1 (SIEMENS AG [DE]) 17. April 2013 (2013-04-17) * Absätze [0003] - [0009], [0014], [0017] - [0022] * * Abbildungen 1-3 * ----- | 1-7 | INV. G05B19/05 |
| A | DE 10 2020 102820 A1 (INTEL CORP [US]) 10. September 2020 (2020-09-10) * Absätze [0038], [0054] - [0056], [0087] * ----- | 1-7 | |
| A | US 5 802 378 A (ARNDT RICHARD LOUIS [US] ET AL) 1. September 1998 (1998-09-01) * Spalte 4, Zeilen 3-20 * * Abbildung 2 * ----- | 1-7 | |

RECHERCHIERTE SACHGEBIETE (IPC)

G06F
G05B

Der vorliegende Recherchenbericht wurde für alle Patentansprüche erstellt

| Recherchenort | Abschlußdatum der Recherche | Prüfer |
|---|---|---|
| München | 24. März 2025 | Hristov, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

    .......................................................................
& : Mitglied der gleichen Patentfamilie, übereinstimmendes Dokument

EPO FORM 1503 03.82 (P04C03)

16

**ANHANG ZUM EUROPÄISCHEN RECHERCHENBERICHT**
**ÜBER DIE EUROPÄISCHE PATENTANMELDUNG NR.**

EP 24 20 7963

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-03-2025

| Im Recherchenbericht angeführtes Patentdokument | Datum der Veröffentlichung | Mitglied(er) der Patentfamilie | Datum der Veröffentlichung |
|---|---|---|---|
| EP 2284771 B1 | 17-04-2013 | CN 101995841 A<br>EP 2284771 A1<br>US 2011035524 A1 | 30-03-2011<br>16-02-2011<br>10-02-2011 |
| DE 102020102820 A1 | 10-09-2020 | DE 102020102820 A1<br>US 2020133330 A1<br>US 2023367362 A1 | 10-09-2020<br>30-04-2020<br>16-11-2023 |
| US 5802378 A | 01-09-1998 | JP 2908739 B2<br>JP H08263310 A<br>US 5802378 A | 21-06-1999<br>11-10-1996<br>01-09-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 2284771 B1
- EP 2241953 B1